# EUROPEAN PATENT APPLICATION

(11) **EP 4 773 372 A1**
(43) Date of publication of application: **08.07.2026**
(21) Application number: 24858689.3
(22) Date of filing: 29.08.2024
(51) Int. Cl.: H01M 50/244, H01M 50/242, H01M 50/30, H01M 50/358, H01M 10/613, H01M 10/6556, H01M 10/6567, H01M 10/617

(54) **BATTERY PACK**

(30) Priority: 29.08.2023 CN 202322327011 U; 29.08.2023 CN 202322328115 U; 29.08.2023 CN 202322340682 U; 29.08.2023 CN 202322336238 U
(71) Applicant: SVOLT Energy Technology Co., Ltd., Changzhou, Jiangsu 213200 (CN)
(72) Inventor: CHENG, Chuansheng, Hangzhou, Jiangsu 213200 (CN); QU, Fanduo, Hangzhou, Jiangsu 213200 (CN)
(74) Representative: Michalski Hüttermann & Partner mbB
(86) International application number: PCT/CN2024/115601
(87) International publication number: WO 2025/045158

(57) **Abstract**

The present application discloses a battery pack, including: a battery box, wherein a battery module is arranged in the battery box, and a bottom of the battery module is provided with an explosion-proof valve; and a bottom protection plate assembly including a liquid cooling plate and a bottom protection plate component, and the liquid cooling plate is mounted at the bottom of the battery module. By providing the bottom protection plate assembly and the liquid cooling plate at the bottom of the battery box, a protection effect on the battery module arranged in the battery pack is improved, use safety of the battery pack is ensured, a use effect is better, and an application range is wider.

## Description

### CROSS-REFERENCE TO THE ERELATED APPLICATIONS

The present application claims priority to Chinese Patent Application No. 202322327011.8, entitled "Battery Pack", filed with China National Intellectual Property Administration on August 29, 2023; Chinese Patent Application No. 202322328115.0, entitled "Battery Pack", filed with China National Intellectual Property Administration on August 29, 2023; Chinese Patent Application No. 202322340682.8, entitled "Battery Pack", filed with China National Intellectual Property Administration on August 29, 2023; and Chinese Patent Application No. 202322336238.9, entitled "Battery Pack", filed with China National Intellectual Property Administration on August 29, 2023, the entire contents of which are incorporated herein by reference.

### TECHNICAL FIELD

The present application relates to the field of battery pack manufacturing technologies, and particularly to a battery pack

### BACKGROUND

During running of an electric vehicle, various complex working conditions may occur. In order to improve a capability of a battery pack to cope with various working conditions, structural strength of the battery pack has to be improved, and a design manner of a structure of the battery pack directly influences an overall safety performance of the battery pack. With a focus on safety performances and energy, the safety performance of the battery pack becomes increasingly important; with a development of new processes and new technologies, structural forms of the battery pack are diversified; with a continuous increase of energy density of the battery pack, a highly-integrated battery pack structure becomes particularly important.

The existing battery pack has various arrangement forms, and basically, a cell pole is upward, and an explosion-proof valve is upward; or the cell pole faces one side or two sides, and the explosion-proof valve and the pole face the same side; the above-mentioned arrangement of a cell is relatively common, but protection of the cell is poor in the existing battery pack, and there is room for improvement.

### SUMMARY

The present application seeks to solve at least one of the technical problems existing in the prior art. To this end, the present application provides a battery pack which can improve a protection effect on a battery module and ensure use safety of the battery pack.

A battery pack according to an embodiment of the present application includes: a battery box, wherein a battery module is arranged in the battery box, and a bottom of the battery module is provided with an explosion-proof valve; and a bottom protection plate assembly including a liquid cooling plate and a bottom protection plate component, wherein the liquid cooling plate is mounted at the bottom of the battery module, the bottom protection plate component is connected to a bottom of the battery box and supported at a bottom of the liquid cooling plate, the liquid cooling plate is provided with a cooling flow channel and an avoidance groove, the avoidance groove is right opposite to the explosion-proof valve, and the bottom protection plate component is provided with an exhaust passage communicated with the avoidance groove.

In the battery pack according to the embodiment of the present application, by providing the bottom protection plate assembly and the liquid cooling plate at the bottom of the battery box, a protection effect on the battery module arranged in the battery pack is improved, use safety of the battery pack is ensured, a use effect is better, and an application range is wider.

In the battery pack according to some embodiments of the present application, the liquid cooling plate includes a bottom plate portion and a side plate portion, the bottom plate portion and the side plate portion are connected in a bent manner and respectively provided with the cooling flow channel, the bottom plate portion is located at the bottom of the battery module, and the side plate portion is located on a side of the battery module.

In the battery pack according to some embodiments of the present application, the cooling flow channel includes a first flow channel and a second flow channel, an extending direction of the first flow channel is intersected with an extending direction of the second flow channel, the first flow channel is arranged at the bottom plate portion, one part of the second flow channel is located on the bottom plate portion, and the other part thereof is located on the side plate portion.

In the battery pack according to some embodiments of the present application, the avoidance groove is spaced apart from the first flow channel in parallel.

In the battery pack according to some embodiments of the present application, a first heat-conducting structural adhesive is arranged between the bottom plate portion and the battery module;
and/or, the side of the battery module is provided with a pole, a busbar is connected to the pole, and a second heat-conducting structural adhesive is arranged between the side plate portion and the busbar.

In the battery pack according to some embodiments of the present application, the liquid cooling plate is provided with an avoidance hole and a communication hole, the avoidance hole is right opposite to the explosion-proof valve, the avoidance hole and the communication hole are respectively communicated with the avoidance groove, and the avoidance groove is communicated with the exhaust passage through the communication hole.

In the battery pack according to some embodiments of the present application, a number of the explosion-proof valves of each battery module is multiple, multiple avoidance holes are provided and in one-to-one correspondence with the multiple explosion-proof valves, and the multiple avoidance holes are distributed at intervals along an extending direction of the avoidance groove.

In the battery pack according to some embodiments of the present application, the bottom protection plate component is further provided with a buffer cavity spaced apart from the exhaust passage.

In the battery pack according to some embodiments of the present application, the bottom protection plate component is provided with a buffer member between a region where the buffer cavity is located and the liquid cooling plate.

In the battery pack according to some embodiments of the present application, multiple battery modules and multiple liquid cooling plates are provided and in one-to-one correspondence;

the buffer cavity includes side buffer cavities and middle buffer cavities, the side buffer cavities are located at the bottoms of the battery modules, and the middle buffer cavities are located at bottoms of joints of adjacent battery modules.

The present application seeks to solve at least one of the technical problems existing in the prior art. To this end, an objective of the present application is to provide a battery pack in which the design that an explosion-proof valve is arranged at a lower portion is adopted, an avoidance hole of a first liquid cooling plate is right opposite to the explosion-proof valve, and a second liquid cooling plate is connected with a battery module, so that a temperature of the whole battery module is uniform under working conditions of conventional charging, rapid charging, or the like.

A battery pack according to an embodiment of the present application includes: a battery box, wherein a battery module is mounted in the battery box, and a bottom of the battery module is provided with an explosion-proof valve; a bottom protection plate assembly including a first liquid cooling plate and a bottom protection plate, wherein the bottom protection plate is connected to a bottom of the battery box, the first liquid cooling plate is located between the battery module and the bottom protection plate, and the first liquid cooling plate is provided with an avoidance hole right opposite to the explosion-proof valve; and a second liquid cooling plate, wherein a cooling flow channel is arranged in both the second liquid cooling plate and the first liquid cooling plate, and the second liquid cooling plate is mounted at a top of the battery box and configured to cool a top and a side of the battery module.

In the battery pack according to the embodiment of the present application, the design that the explosion-proof valve is arranged at a lower portion is adopted, the avoidance hole of the first liquid cooling plate is right opposite to the explosion-proof valve, and the second liquid cooling plate is connected with the battery module to cool the battery module in multiple directions, so that a temperature of the whole battery module is uniform under working conditions of conventional charging, rapid charging, or the like.

In the battery pack according to the embodiment of the present application, an exhaust space is defined between the bottom protection plate and the first liquid cooling plate, and the exhaust space is communicated with the avoidance hole.

In the battery pack according to the embodiment of the present application, a buffer member is arranged in the exhaust space, and the buffer member is supported between the bottom protection plate and the first liquid cooling plate.

In the battery pack according to the embodiment of the present application, the second liquid cooling plate includes a top plate portion and a side plate portion, the top plate portion and the side plate portion are connected in a bent manner and respectively provided with the cooling flow channel, the top plate portion is located at the top of the battery module, and the side plate portion is located on the side of the battery module.

In the battery pack according to the embodiment of the present application, a first heat-conducting structural adhesive is arranged between the top plate portion and the battery module; and/or, the side of the battery module is provided with a pole, a busbar is connected to the pole, and a second heat-conducting structural adhesive is arranged between the side plate portion and the busbar.

In the battery pack according to the embodiment of the present application, the cooling flow channel includes a first flow channel and a second flow channel, an extending direction of the first flow channel is intersected with an extending direction of the second flow channel, the first flow channel is arranged at the top plate portion, one part of the second flow channel is located on the top plate portion, and the other part thereof is located on the side plate portion.

The battery pack according to the embodiment of the present application further includes: a reinforcing member mounted at a position of a top of the top plate portion close to an edge of the side plate portion and extending outwards to protrude from the side plate portion to be connected with the battery box.

In the battery pack according to the embodiment of the present application, the liquid cooling plate further includes an intermediate plate portion connected to a lower side surface of the top plate portion, and the intermediate plate portion is spaced apart from the side plate portion in parallel; at least two battery modules are provided, and the intermediate plate portion extends to a position between every two adjacent battery modules to cool side surfaces of the battery modules.

In the battery pack according to the embodiment of the present application, the battery box further includes a box side wall, the box side wall is provided with a buffer cavity, and the buffer cavity includes a plurality of buffer sub-cavities.

The battery pack according to the embodiment of the present application further includes box longitudinal beams, wherein multiple battery modules and multiple first liquid cooling plates are provided and distributed in a one-to-one correspondence manner, the box longitudinal beams are connected between adjacent first liquid cooling plates, and end portions of adjacent battery modules close to each other are supported on the box longitudinal beams.

The present application seeks to solve at least one of the technical problems existing in the prior art. To this end, the present application provides a battery pack which can improve a protection effect on a battery module and ensure use safety of the battery pack.

A battery pack according to an embodiment of the present application includes: a battery box, wherein a battery module is mounted in the battery box, and a bottom of the battery module is provided with an explosion-proof valve; a bottom protection plate assembly including a bottom protection plate component and an explosion-proof valve protection member, wherein the bottom protection plate component is connected to a bottom of the battery box, the explosion-proof valve protection member is supported between the bottom protection plate component and the battery module, and the explosion-proof valve protection member is provided with an avoidance groove right opposite to the explosion-proof valve; and a liquid cooling plate mounted at a top of the battery box, wherein the liquid cooling plate is provided therein with a cooling flow channel and configured to cool a top and a side of the battery module.

In the battery pack according to the embodiment of the present application, by providing the bottom protection plate assembly at the bottom of the battery box and providing the liquid cooling plate at the top of the battery box, a protection effect on the battery module arranged in the battery pack is improved, use safety of the battery pack is ensured, a use effect is better, and an application range is wider.

In the battery pack according to some embodiments of the present application, the liquid cooling plate includes a top plate portion and a side plate portion, the top plate portion and the side plate portion are connected in a bent manner and respectively provided with the cooling flow channel, the top plate portion is located at the top of the battery module, and the side plate portion is located on the side of the battery module.

In the battery pack according to some embodiments of the present application, the cooling flow channel includes a first flow channel and a second flow channel, an extending direction of the first flow channel is intersected with an extending direction of the second flow channel, the first flow channel is arranged at the top plate portion, one part of the second flow channel is located on the top plate portion, and the other part thereof is located on the side plate portion.

In the battery pack according to some embodiments of the present application, multiple first flow channels are provided and arranged at intervals in parallel along a length direction of the top plate portion, and the second flow channel is communicated with the outermost first flow channel.

In the battery pack according to some embodiments of the present application, multiple second flow channels are provided and arranged at intervals in parallel along a width direction of the top plate portion.

In the battery pack according to some embodiments of the present application, a first heat-conducting structural adhesive is arranged between the top plate portion and the battery module; and/or, the side of the battery module is provided with a pole, a busbar is connected to the pole, and a second heat-conducting structural adhesive is arranged between the side plate portion and the busbar.

The battery pack according to some embodiments of the present application further includes: a reinforcing member mounted at a position of a top of the top plate portion close to an edge of the side plate portion and extending outwards to protrude from the side plate portion.

In the battery pack according to some embodiments of the present application, the explosion-proof valve protection member includes a support region and an avoidance region, a side of the avoidance region facing the battery module is provided with the avoidance groove, the support region is supported at the bottom of the battery module, and a buffer groove is formed in a side of the support region facing the bottom protection plate component.

In the battery pack according to some embodiments of the present application, the buffer groove is provided therein with an elastic energy absorbing member.

In the battery pack according to some embodiments of the present application, multiple battery modules and multiple explosion-proof valve protection members are provided and in one-to-one correspondence, and a box longitudinal beam is connected between every two adjacent explosion-proof valve protection members.

The present application seeks to solve at least one of the technical problems existing in the prior art. To this end, the present application provides a battery pack, which can realize a downward arrangement of an explosion-proof valve, improve a bottom protection performance of the battery pack by providing a bottom protection plate, and lower a risk of thermal runaway by providing an exhaust valve and an exhaust passage.

A battery pack according to an embodiment of the present application includes: a battery box, wherein a battery module is mounted in the battery box, and a bottom of the battery module is provided with an explosion-proof valve; and a bottom protection plate assembly including a bottom protection plate and a module bottom plate, wherein the bottom protection plate is connected to a bottom of the battery box, the module bottom plate is supported between the battery module and the bottom protection plate, the module bottom plate is provided with an avoidance hole, the avoidance hole is right opposite to the explosion-proof valve, the bottom protection plate is provided with an exhaust passage, and the exhaust passage is opened towards the avoidance hole.

In the battery pack according to the embodiment of the present application, by providing the bottom protection plate assembly at the bottom of the battery box, an impact force can be effectively absorbed by cooperation of the module bottom plate and the bottom protection plate, so that the explosion-proof valve and the battery module can be protected, and integral structural strength of a bottom of the battery pack is improved. By providing the explosion-proof valve at the bottom of the battery module, exhausting may be performed by the exhaust passage of the bottom protection plate, it is not required to provide the exhaust passage at a top or a side of the battery module as in a conventional battery pack, an internal compact design is realized, and an increase of energy density of the battery pack is facilitated. Meanwhile, an exhaust hole in the module bottom plate and the exhaust passage of the bottom protection plate can rapidly discharge internal gas in time, thus lowering a probability of thermal runaway and further improving safety of the whole battery pack.

In the battery pack according to the embodiment of the present application, a side of the module bottom plate facing the bottom protection plate is provided with an open avoidance groove, the avoidance groove is right opposite to the exhaust passage, and the avoidance hole is formed in a top wall of the avoidance groove.

In the battery pack according to the embodiment of the present application, multiple avoidance holes are provided and in one-to-one correspondence with the multiple explosion-proof valves, and the multiple avoidance holes are distributed at intervals along a length direction of the avoidance groove.

In the battery pack according to the embodiment of the present application, the module bottom plate further includes at least two support regions, the avoidance groove is defined between every two adjacent support regions, and a first buffer support member is arranged between each support region and the battery module.

In the battery pack according to the embodiment of the present application, a plurality of buffer cavities are formed in the support region, and every two adjacent buffer cavities are separated by a separation rib plate.

In the battery pack according to the embodiment of the present application, a side wall of the buffer cavity connected with the avoidance groove and/or at least one separation rib plate are/is configured as inclined reinforcing plates/an inclined reinforcing plate.

In the battery pack according to the embodiment of the present application, a cooling medium or a buffer material is arranged in the buffer cavity.

In the battery pack according to the embodiment of the present application, the bottom protection plate is further provided with a buffer groove spaced apart from the exhaust passage, and a second buffer support member is arranged in the buffer groove.

In the battery pack according to the embodiment of the present application, the buffer groove includes a first buffer groove and a second buffer groove, the first buffer groove is opened on a side of the bottom protection plate facing away from the module bottom plate, and the second buffer groove is opened on a side of the bottom protection plate facing the module bottom plate.

The battery pack according to the embodiment of the present application further includes: a liquid cooling plate mounted at a top of the battery box, wherein a heat-conducting structural adhesive is arranged between the liquid cooling plate and the battery module.

Additional aspects and advantages of the present application will be set forth in part in the following description and in part will become apparent from the following description, or be learned from the practice of the present application.

### BRIEF DESCRIPTION OF THE DRAWINGS

The above and/or additional aspects and advantages of the present application will become apparent and more readily appreciated from the following descriptions of the embodiments made with reference to the drawings, in which:
FIG. 1 is an exploded view of a battery pack according to an embodiment of the present application;
FIG. 2 is a partial exploded view of the battery pack according to the embodiment of the present application;
FIG. 3 is a schematic structural diagram of a liquid cooling plate in the embodiment of the present application.
FIG. 4 is a schematic structural diagram of a bottom protection plate component in the embodiment of the present application.
FIG. 5 is an exploded view of a battery pack according to an embodiment of the present application;
FIG. 6 is a schematic structural diagram of a first liquid cooling plate and a bottom protection plate in the embodiment of the present application.
FIG. 7 is a schematic structural diagram of a second liquid cooling plate in the embodiment of the present application.
FIG. 8 is a schematic structural diagram of the first liquid cooling plate in the embodiment of the present application.
FIG. 9 is an exploded view of a battery pack according to an embodiment of the present application;
FIG. 10 is a schematic structural diagram of a liquid cooling plate in the embodiment of the present application.
FIG. 11 is an overall schematic structural diagram of a battery pack according to an embodiment of the present application;
FIG. 12 is a schematic structural diagram of a bottom protection plate assembly of the battery pack according to the embodiment of the present application;
FIG. 13 is a schematic structural diagram of a module bottom plate of the battery pack according to the embodiment of the present application;
FIG. 14 is a sectional view taken along direction A in FIG. 13; and
FIG. 15 is a schematic structural diagram of a bottom protection plate of the battery pack according to the embodiment of the present application.

### Reference numerals:

battery pack 100;
battery box 1; upper cover plate 2; structural adhesive 3; battery module 4; pole 41; busbar 42; explosion-proof valve 5; first heat-conducting structural adhesive 6; second heat-conducting structural adhesive 7;
liquid cooling plate 8; bottom plate portion 81; side plate portion 82; first flow channel 831; second flow channel 832; avoidance groove 84; avoidance hole 85; communication hole 86;
bottom protection plate component 9; buffer cavity 91; exhaust passage 92; buffer member 93;
battery pack 20100;
battery module 201; first liquid cooling plate 202; avoidance hole 2021; second liquid cooling plate 203; top plate portion 2031; first flow channel 20311; 20321-second flow channel; 2032-side plate portion; 2033-intermediate plate portion; 20331-middle flow channel; 2034-reinforcing member; bottom heat-conducting structural adhesive 204; explosion-proof valve 205; bottom protection plate 206; box side wall 207; buffer cavity 2071; buffer member 208; middle heat-conducting structural adhesive 209; first heat-conducting structural adhesive 2010; pole 2011; second heat-conducting structural adhesive 2012; box longitudinal beam 2013;
battery pack 30100;
battery box 301; battery module 302; bottom protection plate component 303; explosion-proof valve 304; insulating sheet 3041; first heat-conducting structural adhesive 305; pole 306; busbar 307; second heat-conducting structural adhesive 308; box longitudinal beam 309;
explosion-proof valve protection member 3010; avoidance groove 30101; elastic energy absorbing member 30102; support region 30103; structural adhesive 30104;
liquid cooling plate 3011; top plate portion 30111; side plate portion 30112; first flow channel 30113; second flow channel 30114; reinforcing member 30115;
battery pack 40100;
battery box 401; battery module 4011; explosion-proof valve 4012; bottom protection plate assembly 402;
module bottom plate 4021; avoidance hole 40211; avoidance groove 40212; support region 40213; buffer cavity 402131; separation rib plate 402132;
bottom protection plate 4022; exhaust passage 40221; buffer groove 40222; first buffer groove 402221; second buffer groove 402222;
liquid cooling plate 403; first buffer support member 404; second buffer support member 405; heat-conducting structural adhesive 406.

### DETAILED DESCRIPTION OF THE EMBODIMENTS

Embodiments of the present application are described in detail below, examples of which are illustrated in the accompanying drawings, wherein the same or similar reference numerals refer to the same or similar elements or elements having the same or similar functions throughout. The embodiments described below with reference to the accompanying drawings are exemplary and merely used to explain the present application and should not be construed as limiting the present application.

In descriptions of the present application, it should be understood that, directions or positional relationships indicated by terms "center", "longitudinal", "transverse", "length", "width", "thickness", "upper", "lower", "front", "rear", "left", "right", " vertical", "horizontal", "top", "bottom", "inner", "outer", "clockwise", "anticlockwise", "axial", "radial", "circumferential" etc. are based on orientations or positional relationships shown in the accompanying drawings, and they are used only for describing the present application and for description simplicity, but do not indicate or imply that an indicated device or element must have a specific orientation or be constructed and operated in a specific orientation. Therefore, it cannot be understood as a limitation on the present application. Furthermore, the feature defined with "first" and "second" may include one or more of this feature explicitly or implicitly. In the description of the present application, "a plurality of" means two or more unless otherwise stated.

In the description of the present application, it should be noted that unless specified or limited otherwise, the terms "mounted", "connected", and "coupled" and the like are used broadly, and may be, for example, fixed connections, detachable connections, or integral connections; may also be mechanical or electrical connections; may also be direct connections or indirect connections via intervening structures; may also be inner communications of two elements. The specific meanings of the above terms in the present application can be understood by those of ordinary skill in the art according to specific cases.

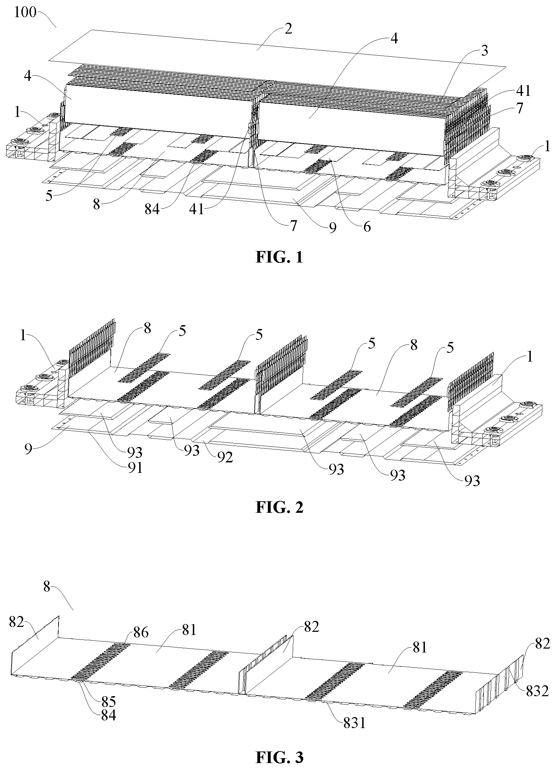

A battery pack 100 according to an embodiment of the present application is described below with reference to FIGS. 1 to 4, which can improve a protection effect on a battery module 4 and ensure use safety of the battery pack 100.

As shown in FIGS. 1 to 4, the battery pack 100 according to the embodiment of the present application includes: a battery box 1 and a bottom protection plate assembly.

The battery module 4 is arranged in the battery box 1, a bottom of the battery module 4 is provided with an explosion-proof valve 5, the bottom protection plate assembly includes a liquid cooling plate 8 and a bottom protection plate component 9, the liquid cooling plate 8 is mounted at the bottom of the battery module 4, the bottom protection plate component 9 is connected to a bottom of the battery box 1 and supported at a bottom of the liquid cooling plate 8, the liquid cooling plate 8 is provided with a cooling flow channel and an avoidance groove 84, the avoidance groove 84 is right opposite to the explosion-proof valve 5, and the bottom protection plate component 9 is provided with an exhaust passage 92 communicated with the avoidance groove 84.

Specifically, the battery pack 100 includes the battery box 1, the battery box 1 supports and protects structures inside the battery pack 100, the battery module 4 is mounted inside the battery box 1, multiple explosion-proof valves 5 are arranged at the bottom of the battery module 4 and configured to be automatically opened when a pressure or a temperature of the battery module 4 is excessively high, so as to directly release high pressure gas inside the battery pack 100 to prevent an explosion, and an upper cover plate 2 is arranged at a top of the battery module 4 and connected with the battery module 4 through a structural adhesive 3 to protect the top of the battery module 4.

Optionally, the battery pack 100 further includes the bottom protection plate assembly, the bottom protection plate assembly includes the liquid cooling plate 8 and the bottom protection plate component 9, the liquid cooling plate 8 is mounted at the bottom of the battery module 4 and can protect and support the battery module 4, the cooling flow channel is arranged in the liquid cooling plate 8, the cooling flow channel can be configured to cool the battery module 4 to ensure that the temperature of the battery module 4 is balanced under working conditions of conventional charging, rapid charging, or the like, and then guarantee a safety state of the battery pack 100, and the temperature of the battery module 4 can be quickly balanced when the battery module 4 is heated. The liquid cooling plate 8 is further provided with the avoidance groove 84, and the avoidance groove 84 is right opposite to the explosion-proof valve 5 and opened towards the explosion-proof valve 5, so that the high pressure gas inside the battery pack 100 can be exhausted along the avoidance groove 84.

Meanwhile, the bottom protection plate component 9 is connected to the bottom of the battery box 1 and supported at the bottom of the liquid cooling plate 8, and the bottom protection plate component 9 can be made of HC/DP high-strength steel, thermally-formed steel, or the like, so that the bottom protection plate component 9 has high strength and can avoid deformation, or the like, when the battery pack 100 is impacted, so as to protect the explosion-proof valve 5, the battery module 4, or the like. The bottom protection plate component 9 is provided with the exhaust passage 92 communicated with the avoidance groove 84, so that the high pressure gas inside the battery pack 100 can be discharged to the exhaust passage 92 through the avoidance groove 84 and then discharged out of the battery pack 100, thus guaranteeing the use safety of the battery pack 100.

In the battery pack 100 according to the embodiment of the present application, by providing the bottom protection plate assembly and the liquid cooling plate 8 at the bottom of the battery box 1, the protection effect on the battery module 4 arranged in the battery pack 100 is improved, the use safety of the battery pack 100 is ensured, a use effect is better, and an application range is wider.

In some embodiments, the liquid cooling plate 8 includes a bottom plate portion 81 and a side plate portion 82, the bottom plate portion 81 and the side plate portion 82 are connected in a bent manner and respectively provided with the cooling flow channel, the bottom plate portion 81 is located at the bottom of the battery module 4, and the side plate portion 82 is located on a side of the battery module 4.

Specifically, as shown in FIG. 3, the liquid cooling plate 8 includes the bottom plate portion 81 and the side plate portion 82, the bottom plate portion 81 is arranged at the bottom of the battery module 4, the side plate portion 82 is arranged on the side of the battery module 4, the bottom plate portion 81 and the side plate portion 82 are connected in the bent manner, and the bottom plate portion 81 and the side plate portion 82 are respectively provided with the cooling flow channel, so that the liquid cooling plate 8 cools the battery module 4 more quickly and heat transfer is more uniform.

In some embodiments, the cooling flow channel includes a first flow channel 831 and a second flow channel 832, an extending direction of the first flow channel 831 is intersected with an extending direction of the second flow channel 832, the first flow channel 831 is arranged at the bottom plate portion 81, one part of the second flow channel 832 is located on the bottom plate portion 81, and the other part thereof is located on the side plate portion 82.

Specifically, as shown in FIG. 3, the liquid cooling plate 8 is arranged at the bottom and the side of the battery module 4, the liquid cooling plate 8 is provided with the cooling flow channel, and then, the battery module 4 can be subjected to cooling, temperature equalization, or the like. The cooling flow channel includes the first flow channel 831 and the second flow channel 832, both the first flow channel 831 and the second flow channel 832 can be configured to cool the battery module 4, the first flow channel 831 is arranged at the bottom plate portion 81, one part of the second flow channel 832 is arranged at the bottom plate portion 81, the other part is arranged at the side plate portion 82, the two parts are connected, the extending direction of the first flow channel 831 is intersected with the extending direction of the second flow channel 832, and in this embodiment, the extending direction of the first flow channel 831 is perpendicular to the extending direction of the second flow channel 832, thus improving a cooling effect of the liquid cooling plate 8 on the battery module 4.

In some embodiments, the avoidance groove 84 is spaced apart from the first flow channel 831 in parallel, and the liquid cooling plate 8 is mounted at the bottom of the battery module 4. As shown in FIG. 3, the liquid cooling plate 8 is provided with the avoidance groove 84, the avoidance groove 84 is right opposite to the explosion-proof valve 5, and the avoidance groove 84 is spaced apart from the first flow channel 831 in parallel, so that the liquid cooling plate 8 can exhaust the high pressure gas in the battery pack 100 while normally cooling the bottom of the battery module 4, thus improving the use safety of the battery pack 100.

In some embodiments, a first heat-conducting structural adhesive 6 is arranged between the bottom plate portion 81 and the battery module 4; and/or, the side of the battery module 4 is provided with a pole 41, a busbar 42 is connected to the pole 41, and a second heat-conducting structural adhesive 7 is arranged between the side plate portion 82 and the busbar 42.

Specifically, as shown in FIG. 1, the first heat-conducting structural adhesive 6 is arranged between the bottom plate portion 81 of the liquid cooling plate 8 and the battery module 4, the bottom plate portion 81 of the liquid cooling plate 8 and the battery module 4 can be bonded by the first heat-conducting structural adhesive 6, the first heat-conducting structural adhesive 6 can also perform heat transfer, or the like, and when liquid circulates in the first flow channel 831, heat of the battery module 4 can be transferred to the first flow channel 831 through the first heat-conducting structural adhesive 6, and then transferred to the liquid in the first flow channel 831.

Optionally, the side of the battery module 4 is provided with the pole 41, the busbar 42 is connected to the pole 41, the second heat-conducting structural adhesive 7 is arranged between the side plate portion 82 and the busbar 42, the busbar 42 can be connected with the side plate portion 82 through the second heat-conducting structural adhesive 7, the second heat-conducting structural adhesive 7 can perform heat transfer, or the like, and when liquid circulates in the second flow channel 832, the heat of the battery module 4 can be transferred to the second flow channel 832 through the second heat-conducting structural adhesive 7, and then transferred to the liquid in the second flow channel 832, so as to realize cooling and temperature equalization of the pole 41.

In some embodiments, the liquid cooling plate 8 is provided with an avoidance hole 85 and a communication hole 86, the avoidance hole 85 is right opposite to the explosion-proof valve 5, the avoidance hole 85 and the communication hole 86 are respectively communicated with the avoidance groove 84, and the avoidance groove 84 is communicated with the exhaust passage 92 through the communication hole 86.

Specifically, as shown in FIG. 3, the liquid cooling plate 8 is provided with the avoidance hole 85, the avoidance hole 85 is right opposite to the explosion-proof valve 5, and shapes of the explosion-proof valve 5 and the avoidance hole 85 are matched, so that the explosion-proof valve 5 can be placed in the avoidance hole 85. The liquid cooling plate 8 is further provided with the communication hole 86, and the avoidance hole 85 and the communication hole 86 are respectively communicated with the avoidance groove 84. Since the avoidance hole 85 is communicated with the avoidance groove 84, the high pressure gas inside the battery pack 100 can be discharged to the avoidance groove 84 through the explosion-proof valve 5, and since the communication hole 86 is also communicated with the avoidance groove 84, the avoidance groove 84 can be connected through the communication hole 86, so that the high pressure gas in the avoidance groove 84 can be transported through the communication hole 86, thus ensuring transport reliability of the high pressure gas, and improving the use safety of the battery pack 100.

In some embodiments, a number of the explosion-proof valves 5 of each battery module 4 is multiple, multiple avoidance holes 85 are provided and in one-to-one correspondence with the multiple explosion-proof valves 5, and the multiple avoidance holes 85 are distributed at intervals along an extending direction of the avoidance groove 84.

Specifically, as shown in FIGS. 1 to 2, the liquid cooling plate 8 is provided with the avoidance holes 85, the avoidance holes 85 are right opposite to the explosion-proof valves 5, multiple explosion-proof valves 5 can be provided, multiple avoidance holes 85 can also be provided, and the multiple avoidance holes 85 and the multiple explosion-proof valves 5 are arranged in a one-to-one correspondence manner, so that each explosion-proof valve 5 can effectively relieve a pressure, and the arrangement of the multiple explosion-proof valves 5 can improve a pressure relief efficiency, thus further ensuring the use safety of the battery pack 100. The multiple avoidance holes 85 are distributed at intervals along the extending direction of the avoidance groove 84, so that the high pressure gas exhausted through the explosion-proof valves 5 can be conveyed along the avoidance groove 84, and the pressure relief efficiency is improved. Meanwhile, connecting ribs are arranged between the multiple avoidance holes 85, so that the problem that strength of the liquid cooling plate 8 in a length direction is reduced due to the arrangement of the avoidance holes 85 can be avoided, and overall structural strength of the battery pack 100 is improved.

In some embodiments, the bottom protection plate component 9 is further provided with a buffer cavity 91 spaced apart from the exhaust passage 92.

Specifically, as shown in FIGS. 1 to 2 and FIG. 4, the bottom protection plate component 9 is further provided with multiple buffer cavities 91 spaced apart from the exhaust passage 92, and the multiple buffer cavities 91 are arranged at intervals in parallel and can support the bottom of the battery module 4 and realize buffering. When the bottom of the battery pack 100 is impacted, an acting force firstly acts on the bottom protection plate component 9, and since the bottom protection plate component 9 is provided with the buffer cavities 91, the buffer cavities 91 can weaken the acting force to lower an effect of the acting force, thereby protecting the liquid cooling plate 8, the explosion-proof valve 5, or the like, so as to protect the whole battery module 4 and improve the use safety of the battery pack 100. The buffer cavities 91 can be configured into cavity structures or solid structures, and can be filled with buffer materials, thus further improving a buffer effect of the buffer cavities 91.

In some embodiments, the bottom protection plate component 9 is provided with a buffer member 93 between a region where the buffer cavity 91 is located and the liquid cooling plate 8.

Specifically, as shown in FIG. 1, the bottom protection plate component 9 is provided with the buffer member 93 between the region where the buffer cavity 91 is located and the liquid cooling plate 8, and the buffer member 93 can be made of square micro-porous foam, honeycomb foam, or the like, so that the buffer member 93 has good impact resistance and can effectively absorb energy generated by an impact. When the bottom protection plate component 9 is subjected to an external impact force, the acting force acts on the bottom protection plate component 9, is buffered by the buffer cavity 91 of the bottom protection plate component 9 and is then transferred to the buffer member 93, and the buffer member 93 buffers the force and absorbs the energy to weaken the effect of the acting force and then protect the explosion-proof valve 5, thereby protecting the whole battery module 4.

In some embodiments, multiple battery modules 4 and multiple liquid cooling plates 8 are provided and in one-to-one correspondence; the buffer cavity 91 includes side buffer cavities 91 and middle buffer cavities 91, the side buffer cavities 91 are located at the bottoms of the battery modules 4, and the middle buffer cavities 91 are located at bottoms of joints of adjacent battery modules 4.

Specifically, as shown in FIG. 1, multiple battery modules 4 are provided, multiple liquid cooling plates 8 are provided, and the multiple battery modules 4 and the multiple liquid cooling plates 8 are in one-to-one correspondence, thereby improving the protection effect on the battery modules 4 and the cooling effect on the battery modules 4.

Optionally, as shown in FIGS. 1 to 2, the buffer cavity 91 includes the side buffer cavities 91 and the middle buffer cavities 91, the side buffer cavities 91 are located at the bottoms of the battery modules 4, and the middle buffer cavities 91 are located at the bottoms of the joints of the adjacent battery modules 4. That is, the buffer cavity 91 can buffer and support two sides and the middles of the battery modules 4, so as to realize three-point support of the bottoms of the battery modules 4, and ensure overall rigidity of the battery pack 100. The buffer cavity 91 can be filled with buffer materials, thereby further improving the buffer effect of the buffer cavity 91. The bottom protection plate component 9 is arranged at the bottom of the battery module 4, and can serve as a box longitudinal beam, thereby improving an overall integration level of the battery pack 100.

In a battery pack 20100 according to an embodiment of the present application, the design that an explosion-proof valve 205 is arranged at a lower portion is adopted, an avoidance hole of a first liquid cooling plate 202 is right opposite to the explosion-proof valve 205, and a second liquid cooling plate 203 is connected with a battery module 201 to cool the battery module in multiple directions, so that a temperature of the whole battery module is uniform under working conditions of conventional charging, rapid charging, or the like.

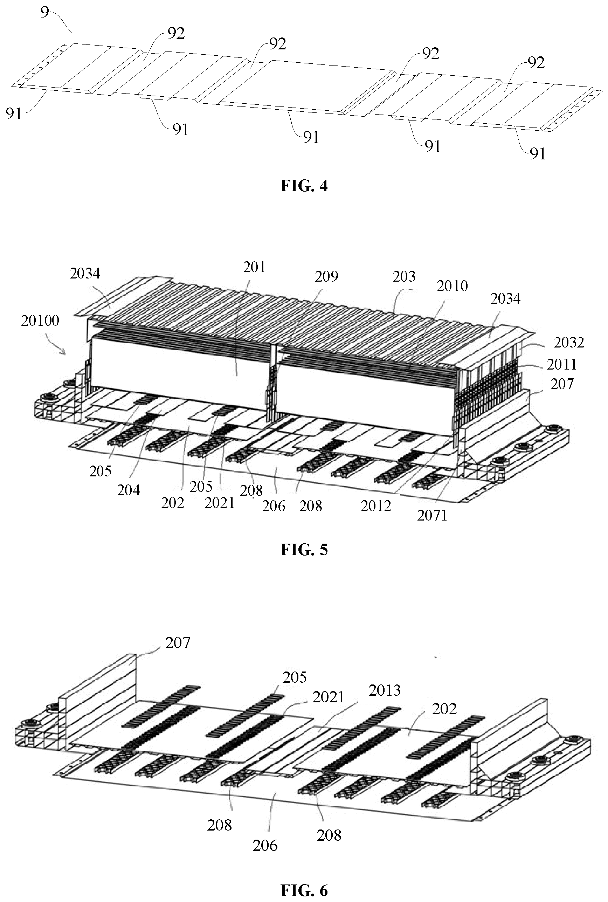

The battery pack 20100 according to the embodiment of the present application is described below with reference to FIGS. 5 to 8, and includes: a battery box, a bottom protection plate assembly and the second liquid cooling plate 203.

The battery module 201 is mounted in the battery box, and a bottom of the battery module 201 is provided with the explosion-proof valve 205; the bottom protection plate assembly includes the first liquid cooling plate 202 and a bottom protection plate 206, the bottom protection plate 206 is connected to a bottom of the battery box, the first liquid cooling plate 202 is located between the battery module 201 and the bottom protection plate 206, and the first liquid cooling plate 202 is provided with the avoidance hole 2021 right opposite to the explosion-proof valve 205;

A cooling flow channel is arranged in both the second liquid cooling plate 203 and the first liquid cooling plate 202, and the second liquid cooling plate 203 is mounted at a top of the battery box and configured to cool a top and a side of the battery module 201.

In practice, the battery box can be made of a steel light material, the material is generally high-strength steel, such as HC340/590DP, HC420/780 and higher-strength steel, and is formed through a rolling process, and a whole weight is reduced. A box side wall 207 and the bottom protection plate assembly form an accommodating space, the battery module 201 can be arranged in the accommodating space, and specifically, when the explosion-proof valves 205 are arranged, the plurality of explosion-proof valves 205 are arranged at intervals at the bottom of the battery module 201, a pole 2011 is arranged on the other side of the battery module 201, and the explosion-proof valves 205 are arranged at the bottom of the battery module 201 and connected with the battery module 201, so that the explosion-proof valves 205 discharge gas downwards, and heat-electricity separation can be realized.

The first liquid cooling plate 202 is connected with the bottom of the battery module 201 through a bottom heat-conducting structural adhesive 204, the bottom heat-conducting structural adhesive 204 has both an energy transferring effect and a connection effect, the first liquid cooling plate 202 is configured to cool the bottom of the battery module 201, and during cooling by the first liquid cooling plate 202, the avoidance hole 2021 of the first liquid cooling plate 202 has the effect of discharging the gas when the explosion-proof valve 205 is opened. Meanwhile, the second liquid cooling plate 203 is mounted at the top of the battery box, the cooling flow channel is arranged in both the first liquid cooling plate 202 and the second liquid cooling plate 203 and configured to accommodate cooling liquid, the second liquid cooling plate 203 cools the top and the side of the battery module 201, and the battery module 201 can be better cooled by combining the first liquid cooling plate 202 and the second liquid cooling plate 203.

Therefore, in the battery module 201 in the embodiment of the present application, the design that the explosion-proof valve 205 is arranged at the lower portion is adopted, the avoidance hole 2021 of the first liquid cooling plate 202 is right opposite to the explosion-proof valve 205, and the second liquid cooling plate 203 is connected with the battery module 201 to cool the top and the bottom of the battery module 201, so that the temperature of the whole battery module 201 is uniform under the working conditions of conventional charging, rapid charging, or the like.

In some embodiments, an exhaust space is defined between the bottom protection plate 206 and the first liquid cooling plate 202, and the exhaust space is communicated with the avoidance hole 2021. Firstly, while the first liquid cooling plate 202 cools the bottom of the battery module 201, when a pressure of the battery module 201 changes, the exhaust space defined between the first liquid cooling plate 202 and the bottom protection plate 206 enables the gas to flow from the explosion-proof valve 205 to the avoidance hole 2021 of the first liquid cooling plate 202, flow from the avoidance hole 2021 to one side of the bottom protection plate 206, flow from the exhaust space between the bottom protection plate 206 and the first liquid cooling plate 202 to a pressure relief valve on the box side wall 207 of the battery box, and be exhausted through the pressure relief valve on the box side wall 207, thus ensuring safety of the battery module 201. Meanwhile, the first liquid cooling plate 202 cools and protects the battery module 201, so that the temperature of the battery module 201 is balanced under the working conditions of conventional charging, rapid charging, or the like.

In some embodiments, a buffer member 208 is arranged in the exhaust space, and the buffer member 208 is supported between the bottom protection plate 206 and the first liquid cooling plate 202.

Specifically, the buffer members 208 are connected to the bottom protection plate 206, the buffer members 208 may be of a honeycomb structure, the buffer members 208 are arranged at intervals in parallel along the bottom protection plate 206, the buffer members 208 can improve a buffer performance for the battery module 201 when the battery box is impacted from the outside, and then improve a protection effect on the explosion-proof valve 205 and the battery module 201, and the buffer members 208 are generally made of MPP square micro-porous foam, PP interlayers, or the like.

In some embodiments, the second liquid cooling plate 203 includes a top plate portion 2031 and a side plate portion 2032, the top plate portion 2031 and the side plate portion 2032 are connected in a bent manner and respectively provided with the cooling flow channel, the top plate portion 2031 is located at the top of the battery module 201, and the side plate portion 2032 is located on the side of the battery module 201.

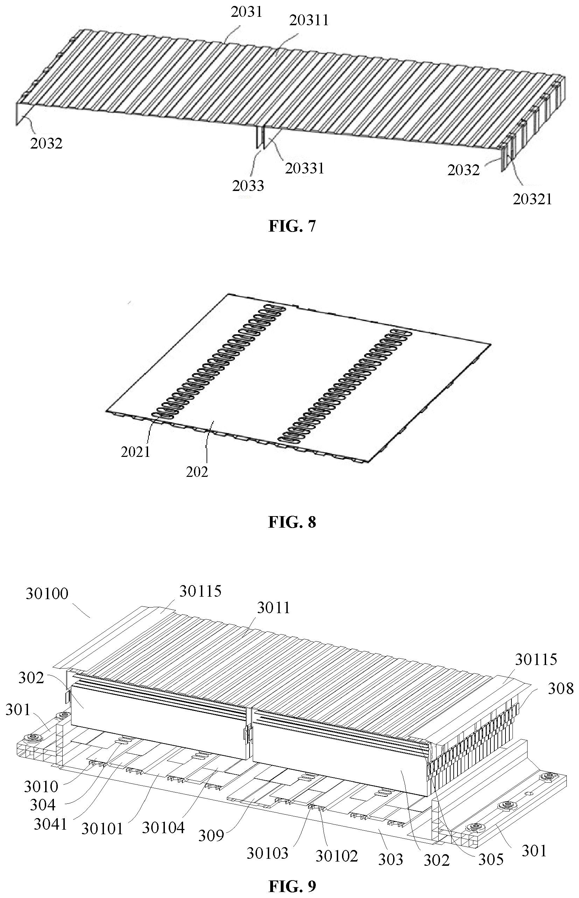

Specifically, as shown in FIGS. 5 and 7, the second liquid cooling plate 203 includes the top plate portion 2031 and the side plate portion 2032, the top plate portion 2031 is arranged at the top of the battery module 201, the side plate portion 2032 is arranged on the side of the battery module 201, the top plate portion 2031 and the side plate portion 2032 are connected in the bent manner, and the top plate portion 2031 and the side plate portion 2032 are respectively provided with the cooling flow channel, so that the second liquid cooling plate 203 cools the battery module 201 more quickly and heat transfer is more uniform.

In some embodiments, a first heat-conducting structural adhesive 2010 is arranged between the top plate portion 2031 and the battery module 201; and/or, the side of the battery module 201 is provided with a pole 2011, a busbar is connected to the pole 2011, and a second heat-conducting structural adhesive 2012 is arranged between the side plate portion 2032 and the busbar.

In practice, the first heat-conducting structural adhesive 2010 can bond the top plate portion 2031 of the second liquid cooling plate 203 and the battery module 201 and also has the effect of transferring heat of the top plate portion 2031 of the second liquid cooling plate 203 to the battery module 201, and meanwhile, the second heat-conducting structural adhesive 2012 connects the side plate portion 2032 of the second liquid cooling plate 203 with the busbar of the battery module 201, and during charging, a temperature of the busbar is quite high, and the busbar is cooled through the side plate portion 2032, thus further ensuring safety of the battery module 201. Meanwhile, the first liquid cooling plate 202 and the top plate portion 2031 and the side plate portion 2032 of the second liquid cooling plate 203 can further realize temperature equalization of the whole battery module 201 under working conditions of conventional charging, rapid charging, or the like.

In some embodiments, the cooling flow channel includes a first flow channel 20311 and a second flow channel 20321, an extending direction of the first flow channel 20311 is intersected with an extending direction of the second flow channel 20321, the first flow channel 20311 is arranged at the top plate portion 2031, one part of the second flow channel 20321 is located on the top plate portion 2031, and the other part thereof is located on the side plate portion 2032.

Specifically, as shown in FIG. 7, multiple first flow channels 20311 are provided, arranged at intervals in parallel, and distributed at intervals along the left-right direction in FIG. 5, and meanwhile, multiple second flow channels 20321 are provided and arranged at intervals, and the extending direction of the first flow channels 20311 is perpendicular to the extending direction of the second flow channels 20321, thus improving a cooling effect of the liquid cooling plate on the battery module 201.

In some embodiments, the battery pack further includes: a reinforcing member 2034 mounted at a position of a top of the top plate portion 2031 close to an edge of the side plate portion 2032 and extending outwards to protrude from the side plate portion 2032 to be connected with the battery box.

In practice, the reinforcing member 2034 and the second liquid cooling plate 203 are welded or connected through a fixing member or bonded, and the second liquid cooling plate 203 is connected to the battery box through the reinforcing member 2034, so that when the battery box is subjected to an external force, a buffer force of the battery box can be enhanced, and the second liquid cooling plate 203 and the battery box are better protected.

In addition, the reinforcing member 2034 extends outwards to protrude from the side plate portion 2032, so that the structure of the reinforcing member 2034 is bent, which can further enhance a buffer capability of the reinforcing member 2034 structurally, and therefore, the reinforcing member 2034 has an improved protection performance for the second liquid cooling plate 203 and the battery module 201.

In some embodiments, the second liquid cooling plate 203 further includes an intermediate plate portion 2033 connected to a lower side surface of the top plate portion 2031, and the intermediate plate portion 2033 is spaced apart from the side plate portion 2032 in parallel; at least two battery modules 201 are provided, and the intermediate plate portion 2033 extends to a position between every two adjacent battery modules 201 to cool side surfaces of the battery modules 201.

As shown in FIGS. 5 and 7, the intermediate plate portion 2033 extends to the position between every two adjacent battery modules 201 and is bonded to the position by a middle heat-conducting structural adhesive 209, the middle heat-conducting structural adhesive 209 has the effect of bonding the intermediate plate portion 2033 to the battery modules 201, and meanwhile, the intermediate plate portion 2033 is provided therein with a middle flow channel 20331 communicated with the cooling flow channel of the top plate portion 2031, and the middle heat-conducting structural adhesive 209 can also transmit energy of the second liquid cooling plate 203 to the busbars on opposite sides of the adjacent battery modules 201, so that the temperatures of the busbars of the adjacent battery modules 201 are lowered. Therefore, under the combined action of the second liquid cooling plate 203 and the first liquid cooling plate 202, the temperatures of the battery modules 201 can be uniform, and the temperatures can be prevented from being excessively high.

In some embodiments, the battery box further includes a box side wall 207, the box side wall 207 is provided with a buffer cavity 2071, and the buffer cavity 2071 includes a plurality of buffer sub-cavities.

Referring to FIGS. 5 and 6, the box side wall 207 of the battery box includes the buffer cavity 2071, the plurality of square buffer sub-cavities are arranged in the buffer cavity 2071, and meanwhile, the box side wall 207 of the battery box extends outwards to form a box connecting portion, the box connecting portion fixes the battery box at a specific position, and the box connecting portion is also provided with a plurality of buffer sub-cavities. By providing the plural buffer sub-cavities in each of the side wall and the box connecting portion of the battery box, the buffer force of the battery box during the external impact can be enhanced, and the battery box can be better protected. Meanwhile, by providing the plural buffer sub-cavities in the side wall of the battery box, a weight of the battery box can be reduced.

In some embodiments, the battery pack further includes box longitudinal beams 2013, wherein multiple battery modules 201 and multiple first liquid cooling plates 202 are provided and distributed in a one-to-one correspondence manner, the box longitudinal beams 2013 are connected between adjacent first liquid cooling plates 202, and end portions of adjacent battery modules 201 close to each other are supported on the box longitudinal beams 2013.

Referring to FIGS. 5 and 6, two battery modules 201 are arranged inside the battery box, the first liquid cooling plate 202 is arranged at the bottom of each battery module 201, the two adjacent first liquid cooling plates 202 are connected through the box longitudinal beam 2013, a liquid cooling plate at a bottom of the box longitudinal beam 2013 is of a split structure, that is, includes the two first liquid cooling plates 202, and the box longitudinal beam 2013 and the battery box jointly support the battery modules 201, so that overall structural rigidity is high.

A battery pack 30100 according to an embodiment of the present application is described below with reference to FIGS. 9 to 10, which can improve a protection effect on a battery module 302 and ensure use safety of the battery pack 30100.

As shown in FIGS. 9 to 10, the battery pack 30100 according to the embodiment of the present application includes: a battery box 1, a bottom protection plate assembly and a liquid cooling plate 3011.

The battery module 302 is mounted in the battery box 301, a bottom of the battery module 302 is provided with an explosion-proof valve 304, the bottom protection plate assembly includes a bottom protection plate component 303 and an explosion-proof valve protection member 3010, the bottom protection plate component 303 is connected to a bottom of the battery box 301, the explosion-proof valve protection member 3010 is supported between the bottom protection plate component 303 and the battery module 302, the explosion-proof valve protection member 3010 is provided with an avoidance groove 30101 right opposite to the explosion-proof valve 304, the liquid cooling plate 3011 is mounted at a top of the battery box 301, and the liquid cooling plate 3011 is provided therein with a cooling flow channel and configured to cool a top and a side of the battery module 302.

Specifically, the battery pack 30100 includes the battery box 301, the battery box 301 is arranged on two sides of the battery pack 30100, and the battery box 301 supports and protects structures inside the battery pack 30100. The battery module 302 is mounted inside the battery box 301, the bottom of the battery module 302 is provided with the plurality of explosion-proof valves 304, and the explosion-proof valves 304 are configured to be automatically opened when a pressure or a temperature of the battery module 302 is excessively high, so as to directly release high pressure gas inside the battery pack 30100 to prevent an explosion. Each explosion-proof valve 304 is correspondingly provided with an insulating sheet 3041.

Optionally, the battery pack 30100 further includes the bottom protection plate assembly, the bottom protection plate assembly includes the bottom protection plate component 303 and the explosion-proof valve protection member 3010, the bottom protection plate component 303 is connected to the bottom of the battery box 301, and the bottom protection plate component 303 can be made of HC340/590DP high-strength steel, thermally-formed steel, or the like, so that the bottom protection plate component 303 has high strength and can avoid deformation, or the like, when the battery pack 30100 is impacted, so as to protect the explosion-proof valve 304, the battery module 302, or the like. The explosion-proof valve protection member 3010 is supported between the bottom protection plate component 303 and the battery module 302, and is connected to the bottom of the battery module 302 through a structural adhesive 30104, or the like, the explosion-proof valve protection member 3010 is provided with the avoidance groove 30101 right opposite to the explosion-proof valve 304, the avoidance groove 30101 is opened towards the explosion-proof valve 304, and the avoidance groove 30101 may be designed to be U-shaped, so that the high pressure gas inside the battery pack 30100 can be exhausted along the avoidance groove 30101. The insulating sheet 3041 is arranged between the explosion-proof valve 304 and the avoidance groove 30101, and the insulating sheet 3041 can prevent the explosion-proof valve 304 from arcing under extreme working conditions, thus ensuring a use effect.

The battery pack 30100 further includes the liquid cooling plate 3011, the liquid cooling plate 3011 is mounted at the top of the battery box 301 and connected with the battery box 301 through bonding, screwing, welding, or the like, and can protect and support the battery module 302 inside the battery pack 30100, the cooling flow channel is arranged in the liquid cooling plate 8, the cooling flow channel can be configured to cool the top and the side of the battery module 302 to ensure that the temperature of the battery module 302 is balanced under working conditions of conventional charging, rapid charging, or the like, and then guarantee a safety state of the battery pack 30100, and the temperature of the battery module 302 can be quickly balanced when the battery module 302 is heated.

In the battery pack 30100 according to the embodiment of the present application, by providing the bottom protection plate assembly at the bottom of the battery box 301 and providing the liquid cooling plate 3011 at the top of the battery box 301, the protection effect on the battery module 302 arranged in the battery pack 30100 is improved, the use safety of the battery pack 30100 is ensured, a use effect is better, and an application range is wider.

In some embodiments, the liquid cooling plate 3011 includes a top plate portion 30111 and a side plate portion 30112, the top plate portion 30111 and the side plate portion 30112 are connected in a bent manner and respectively provided with the cooling flow channel, the top plate portion 30111 is located at the top of the battery module 302, and the side plate portion 30112 is located on the side of the battery module 302.

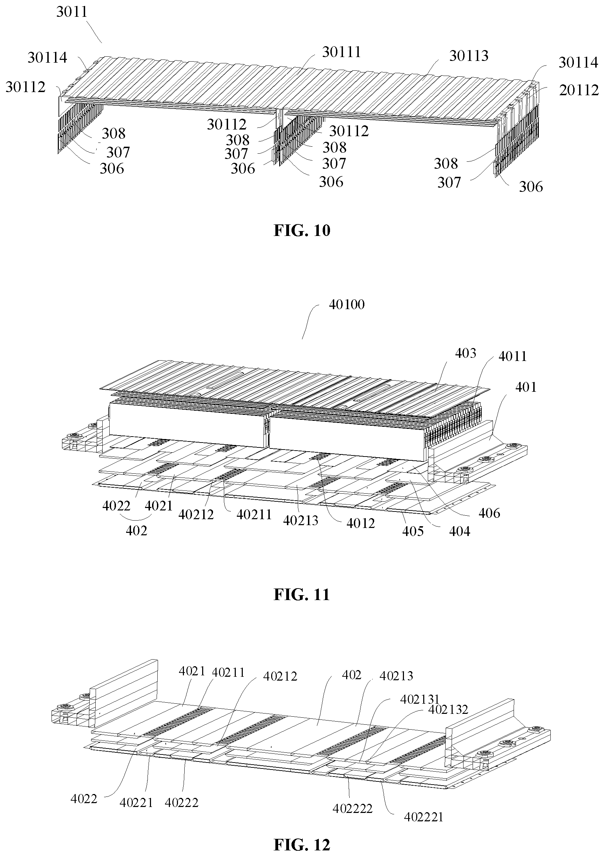

Specifically, as shown in FIG. 10, the liquid cooling plate 3011 includes the top plate portion 30111 and the side plate portion 30112, the top plate portion 30111 is arranged at the top of the battery module 302, the side plate portion 30112 is arranged on the side of the battery module 302, the top plate portion 30111 and the side plate portion 30112 are connected in the bent manner, and the top plate portion 30111 and the side plate portion 30112 are respectively provided with the cooling flow channel, so that the liquid cooling plate 3011 cools the battery module 302 more quickly and heat transfer is more uniform.

In some embodiments, the cooling flow channel includes a first flow channel 30113 and a second flow channel 30114, an extending direction of the first flow channel 30113 is intersected with an extending direction of the second flow channel 30114, the first flow channel 30113 is arranged at the top plate portion 30111, one part of the second flow channel 30114 is located on the top plate portion 30111, and the other part thereof is located on the side plate portion 30112.

Specifically, as shown in FIG. 10, the liquid cooling plate 3011 is arranged at the top and the side of the battery module 302, the liquid cooling plate 3011 is provided with the cooling flow channel, and then, the battery module 302 can be subjected to cooling, temperature equalization, or the like. The cooling flow channel includes the first flow channel 30113 and the second flow channel 30114, both the first flow channel 30113 and the second flow channel 30114 can be configured to cool the battery module 302, the first flow channel 30113 is arranged at the top plate portion 30111, one part of the second flow channel 30114 is arranged at the top plate portion 30111, the other part is arranged at the side plate portion 30112, the two parts are connected, the extending direction of the first flow channel 30113 is intersected with the extending direction of the second flow channel 30114, and in this embodiment, the extending direction of the first flow channel 30113 is perpendicular to the extending direction of the second flow channel 30114, thus improving a cooling effect of the liquid cooling plate 3011 on the battery module 302.

In some embodiments, multiple first flow channels 30113 are provided and arranged at intervals in parallel along a length direction of the top plate portion 30111, and the second flow channel 30114 is communicated with the outermost first flow channel 30113.

Specifically, as shown in FIG. 10, the first flow channels 30113 are arranged at the top plate portion 30111, and the plural first flow channels 30113 are arranged at intervals in parallel along the length direction of the top plate portion 30111. That is, a length of each first flow channel 30113 is the same as a width of the top plate portion 30111. When the liquid cooling plate 3011 cools the battery module 302, liquid flows in the first flow channels 30113, and since the first flow channels 30113 are short, the liquid can be uniformly distributed on the entire top plate portion 30111 in a short time, thus improving a cooling effect on the top of the battery module 302. The plurality of first flow channels 30113 are arranged at intervals in parallel along the length direction of the top plate portion 30111, so that heat transfer of the first flow channels 30113 is more uniform, and a temperature equalizing effect of the liquid cooling plate 3011 on the battery module 302 is improved. The second flow channel 30114 is communicated with the outermost first flow channel 30113, so that the liquid can flow to the second flow channel 30114 through the first flow channel 30113, so as to perform cooling, temperature equalization, or the like, on the side plate portion 30112.

In some embodiments, multiple second flow channels 30114 are provided and arranged at intervals in parallel along a width direction of the top plate portion 30111.

Specifically, as shown in FIG. 10, one part of the second flow channels 30114 are located at the top plate portion 30111, the other part of the second flow channels 30114 are located at the side plate portion 30112, the plural second flow channels 30114 are arranged at intervals in parallel in the width direction of the top plate portion 30111, and a flow direction of liquid in the second flow channels 30114 is perpendicular to a flow direction of the liquid in the first flow channels 30113. When the liquid cooling plate 3011 cools the battery module 302, the liquid flows in the second flow channels 30114, and since the second flow channels 30114 are uniformly distributed on the side plate portion 30112, the liquid in the second flow channels 30114 can be distributed on the whole side plate portion 30112 in a short time, thus improving the cooling effect on the side of the battery module 302. Heat transfer is more uniform through the plurality of second flow channels 30114, and the temperature equalizing effect of the liquid cooling plate 3011 on the battery module 302 is improved.

In some embodiments, a first heat-conducting structural adhesive 305 is arranged between the top plate portion 30111 and the battery module 302; and/or, the side of the battery module 302 is provided with a pole 306, a busbar 307 is connected to the pole 306, and a second heat-conducting structural adhesive 308 is arranged between the side plate portion 30112 and the busbar 307.

Specifically, as shown in FIGS. 9 to 10, the first heat-conducting structural adhesive 305 is arranged between the top plate portion 30111 of the liquid cooling plate 3011 and the battery module 302, the top plate portion 30111 of the liquid cooling plate 3011 and the battery module 302 can be bonded by the first heat-conducting structural adhesive 305, the first heat-conducting structural adhesive 305 can also perform heat transfer, or the like, and when liquid circulates in the first flow channel 30113, heat of the battery module 302 can be transferred to the first flow channel 30113 through the first heat-conducting structural adhesive 305, and then transferred to the liquid in the first flow channel 30113.

Optionally, the side of the battery module 302 is provided with the pole 306, the busbar 307 is connected to the pole 306, the second heat-conducting structural adhesive 308 is arranged between the side plate portion 30112 and the busbar 307, the busbar 307 can be connected with the side plate portion 30112 through the second heat-conducting structural adhesive 308, the second heat-conducting structural adhesive 308 can perform heat transfer, or the like, and when liquid circulates in the second flow channel 30114, the heat of the battery module 302 can be transferred to the second flow channel 30114 through the second heat-conducting structural adhesive 308, and then transferred to the liquid in the second flow channel 30114, so as to realize cooling and temperature equalization of the pole 306.

In some embodiments, the battery pack 30100 further includes: a reinforcing member 30115 mounted at a position of a top of the top plate portion 30111 close to an edge of the side plate portion 30112 and extending outwards to protrude from the side plate portion 30112.

Specifically, as shown in FIG. 9, the battery pack 30100 further includes the reinforcing member 30115, the reinforcing member 30115 is mounted at the position of the top of the top plate portion 30111 close to the edge of the side plate portion 30112, and is connected to the position through bonding, screwing, welding, or the like, and the reinforcing member 30115 extends outwards to protrude from the side plate portion 30112, so that when the top of the battery pack 30100 is impacted, an external acting force acts on the reinforcing member 30115 first, so as to protect the liquid cooling plate 3011, and avoid that the liquid cooling plate 3011 is impacted to cause the flow channel to be broken, and then, the liquid overflows to cause a potential safety hazard.

In some embodiments, the explosion-proof valve protection member 3010 includes a support region 30103 and an avoidance region, a side of the avoidance region facing the battery module 302 is provided with the avoidance groove 30101, the support region 30103 is supported at the bottom of the battery module 302, and a buffer groove is formed in a side of the support region 30103 facing the bottom protection plate component 303.

Specifically, as shown in FIG. 9, the battery pack 30100 includes the bottom protection plate assembly, the bottom protection plate assembly includes the bottom protection plate component 303 and the explosion-proof valve protection member 3010, the explosion-proof valve protection member 3010 is supported between the bottom protection plate component 303 and the battery module 302 and connected to the bottom of the battery module 302 through the structural adhesive 30104, or the like, the explosion-proof valve protection member 3010 includes the support region 30103 and the avoidance region, the side of the avoidance region facing the battery module 302 is provided with the avoidance groove 30101, and the high pressure gas in the battery pack 30100 can be exhausted along the avoidance groove 30101, so that a pressure in the battery pack 30100 is prevented from being excessively high, and the use safety of the battery pack 30100 is improved.

Optionally, the support region 30103 of the explosion-proof valve protection member 3010 is supported at the bottom of the battery module 302, the side of the support region 30103 facing the bottom protection plate component 303 is provided with the buffer groove, and the buffer groove can have buffering and energy absorption effects, so that rigidity of the support region 30103 can be improved. When the bottom protection plate component 303 is subjected to an external impact force, energy generated by an impact can be effectively absorbed through the bottom protection plate assembly, so as to protect the explosion-proof valve 304, and thus protect the whole battery module 302.

In some embodiments, as shown in FIG. 9, the buffer groove is provided therein with an elastic energy absorbing member 30102, the elastic energy absorbing member 30102 may be made of square micro-porous foam, honeycomb foam, or the like, and the elastic energy absorbing member 30102 may be designed into a solid structure, a honeycomb structure, or the like, so that the elastic energy absorbing member 30102 has good impact resistance and can effectively absorb the energy generated by the impact. When the bottom protection plate component 303 is subjected to the external impact force, the acting force acts on the bottom protection plate component 303 and is transferred to the elastic energy absorbing member 30102 through the bottom protection plate component 303, and the elastic energy absorbing member 30102 performs buffering and energy absorption to weaken an effect of the acting force, so as to protect the explosion-proof valve 304, and thus protect the whole battery module 302.

In some embodiments, multiple battery modules 302 and multiple explosion-proof valve protection members 3010 are provided and in one-to-one correspondence, and a box longitudinal beam 309 is connected between every two adjacent explosion-proof valve protection members 3010.

Specifically, as shown in FIG. 9, multiple battery modules 302 are provided, multiple explosion-proof valve protection members 3010 are provided, and the multiple battery modules 302 and the multiple explosion-proof valve protection members 3010 are in one-to-one correspondence, so that the protection effect on the battery modules 302 can be improved. Meanwhile, the box longitudinal beam 309 is connected between every two adjacent explosion-proof valve protection member 3010 to further improve overall strength of the bottom protection plate assembly, and an assembly structure of the whole bottom protection plate assembly can be matched and selected according to requirements of different battery packs 30100.

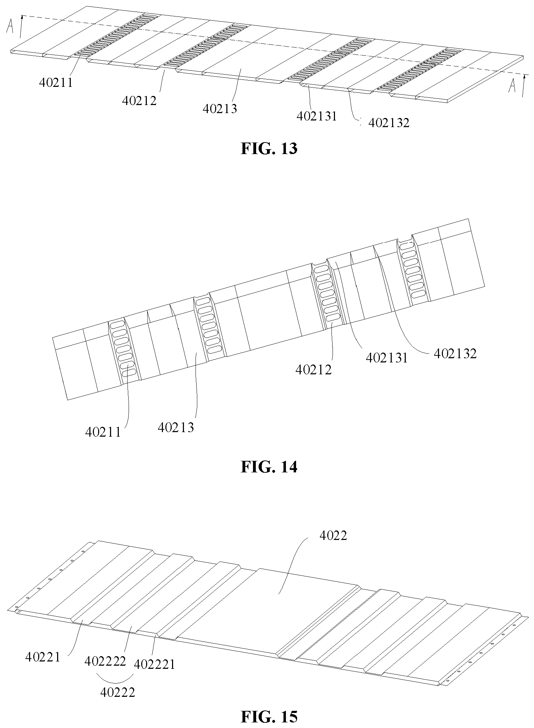

A battery pack 40100 according to an embodiment of the present application is described below with reference to FIGS. 11 to 15, wherein a battery module 4011 is arranged inside a battery box 401, an explosion-proof valve 4012 is arranged at a bottom of the battery module 4011, and a bottom protection plate assembly 402 is arranged at a bottom of the battery box 401, so that the whole battery pack is of an up-and-down structure. The bottom protection plate assembly 402 is arranged to improve a bottom protection performance of the whole battery pack 40100, and internally-generated gas can be exhausted in time by an exhaust passage 40221, thereby reducing a possibility of thermal runaway.

As shown in FIG. 11, the battery pack 40100 according to an embodiment of the present application includes: the battery box 401 and the bottom protection plate assembly 402.

The battery module 4011 is mounted in the battery box 401, and it should be noted that the bottom protection plate assembly 402 in the present application is mounted at the bottom of the battery box 401, the battery box 401 may be configured into an annular frame structure with an open top and an open bottom, and the bottom protection plate assembly 402 is configured to protect and seal the bottom of the battery box 401. The bottom of the battery module 4011 is provided with the explosion-proof valve 4012, and the explosion-proof valve 4012 is configured to release a pressure of the battery module 4011. During actual designing, a plurality of explosion-proof valves 4012 may be arranged at the bottom of the battery module 4011 to be correspondingly matched with a plurality of cells in the battery module 4011 respectively, so that when any cell is subjected to thermal runaway and catches fire, pressure relief and exhausting can be performed through the corresponding explosion-proof valve 4012, thereby avoiding that the internal gas pressure of the battery module 4011 is excessively large and causes large-range thermal runaway, maintaining internal stability of the battery pack 40100, guaranteeing continuous and normal use thereof, and prolonging a service life.

The bottom protection plate assembly 402 includes a bottom protection plate 4022 and a module bottom plate 4021, the bottom protection plate 4022 is connected to the bottom of the battery box 401, and the bottom protection plate 4022 can be connected to the bottom of the battery box 401 in a gluing manner, a double-sided local gum application manner, or the like, so that connection strength is increased, thereby improving overall rigidity of the battery pack 40100. The bottom protection plate 4022 can be made of high-strength steel, such as HC340/590DP and higher-strength steel, or made of thermally-formed steel, or the like, and the high-strength steel is adopted to improve the overall rigidity and meanwhile greatly improve the protection performance of the bottom protection plate 4022.

The module bottom plate 4021 is supported between the battery module 4011 and the bottom protection plate 4022, and thus, the module bottom plate 4021 is located below the battery module 4011 and the explosion-proof valve 4012, so that the module bottom plate 4021 and the bottom protection plate 4022 can jointly protect the battery module 4011 and the explosion-proof valve 4012, and then, overall protection is formed at the bottom of the battery pack 40100, an impact force can be absorbed effectively, and bottom safety of the battery pack 40100 is improved.

Optionally, the module bottom plate 4021 is provided with an avoidance hole 40211 right opposite to the explosion-proof valve 4012, the bottom protection plate 4022 is provided with the exhaust passage 40221, and the exhaust passage 40221 is opened towards the avoidance hole 40211. That is, an exhaust hole may be formed under the explosion-proof valve 4012, so that gas at the explosion-proof valve 4012 can enter the exhaust hole downwards. The exhaust hole is opened towards the exhaust passage 40221 of the bottom protection plate 4022, so that the gas enters the exhaust passage 40221 from the exhaust hole and is discharged to the outside through the exhaust passage 40221. Thus, when a pressure or a temperature inside the battery pack 40100 is excessively high and the explosion-proof valve 4012 is opened, the internal high pressure or high temperature gas can enter the exhaust hole fast and then is discharged out of the battery pack 40100 through the exhaust passage 40221, thus reducing a thermal diffusion risk and improving the safety of the battery pack 40100. Since the explosion-proof valve 4012 is arranged at the bottom of the battery module 4011, it is not required to provide an independent exhaust space on a side or a top of the battery module 4011, and exhausting can be performed using a hollow cavity formed inside the module bottom plate 4021, thus realizing a compact design in the battery pack 40100, and facilitating an increase of energy density of the battery pack 40100.

Since the avoidance hole 40211 is formed in the module bottom plate 4021, and the exhaust passage 40221 is formed in the bottom protection plate 4022, structural spaces of the module bottom plate 4021 and the bottom protection plate 4022 can be fully utilized, and a space utilization rate is increased. Meanwhile, when the bottom protection plate 4022 is connected with the battery box 401, the exhaust passage 40221 can be connected with a pressure relief valve on the battery box 401, which facilitates the gas in the exhaust passage 40221 to be discharged from the pressure relief valve in time, thus realizing rapid gas discharge. In addition, during actual designing, structures, such as an insulating sheet, can be pasted to the exhaust passage 40221, so that the battery module 4011 is effectively isolated and prevented from being damaged, normal operation of the battery module is guaranteed, and a service life of the battery module is prolonged.

In the battery pack 40100 according to the embodiment of the present application, by providing the bottom protection plate assembly 402 at the bottom of the battery box 401, an impact force can be effectively absorbed by cooperation of the module bottom plate 4021 and the bottom protection plate 4022, so that the explosion-proof valve 4012 and the battery module 4011 can be protected, and integral structural strength of the bottom of the battery pack 40100 is improved. By providing the explosion-proof valve 4012 at the bottom of the battery module 4011, exhausting may be performed by the exhaust passage 40221 of the bottom protection plate 4022, it is not required to provide the exhaust passage 40221 at the top or the side of the battery module 4011 as in a conventional battery pack 40100, the internal compact design is realized, and the increase of the energy density of the battery pack 40100 is facilitated. Meanwhile, the exhaust hole in the module bottom plate 4021 and the exhaust passage 40221 of the bottom protection plate 4022 can rapidly discharge the internal gas in time, thus lowering a probability of thermal runaway and further improving the safety of the whole battery pack 40100.

In some embodiments, a side of the module bottom plate 4021 facing the bottom protection plate 4022 is provided with an open avoidance groove 40212, the avoidance groove 40212 is right opposite to the exhaust passage 40221, and the avoidance hole 40211 is formed in a top wall of the avoidance groove 40212. That is, the avoidance groove 40212 and the exhaust passage 40221 are right opposite to each other and opened towards each other, that is, both the avoidance groove 40212 and the exhaust passage 40221 can be used as an exhaust flow channel for exhausting, thereby increasing a sectional area of the exhaust flow channel and increasing an exhaust amount.

As shown in FIGS. 11 to 13, the avoidance groove 40212 is formed in a lower side of the module bottom plate 4021, the avoidance groove 40212 is opened downwards, the exhaust passage 40221 is formed in an upper side of the bottom protection plate 4022, the exhaust passage 40221 is opened upwards, and meanwhile, the avoidance hole 40211 is formed in the top wall of the avoidance groove 40212. Therefore, when thermal runaway occurs in the battery module 4011, the internal high temperature gas can break through the explosion-proof valve 4012 and downwards enter the avoidance groove 40212 from the avoidance hole 40211, and at this point, one part of the gas can be discharged towards the pressure relief valve from the avoidance groove 40212, and the other part of the gas can flow into the exhaust passage 40221 and be discharged towards the pressure relief valve together with the gas in the avoidance groove 40212, so that the exhaust amount is effectively increased, the internal gas can quickly enter the exhaust passage 40221 from top to bottom and be discharged, and the effect of quickly reducing the pressure or temperature inside the battery pack 40100 is achieved.

In some embodiments, multiple avoidance holes 40211 are provided and in one-to-one correspondence with the multiple explosion-proof valves 4012, and the multiple avoidance holes 40211 are distributed at intervals along a length direction of the avoidance groove 40212. It can be understood that, in an actual use process, multiple explosion-proof valves 4012 can be provided and in one-to-one correspondence with the cells, so that when any cell is subjected to thermal runaway, the corresponding explosion-proof valve 4012 can perform pressure relief and exhausting in time, thereby avoiding large-range runaway of the battery module 4011. Correspondingly, multiple avoidance holes 40211 in one-to-one correspondence with the explosion-proof valves 4012 are provided to reserve providing spaces for the explosion-proof valves 4012, thus facilitating the arrangement of the explosion-proof valves 4012. Meanwhile, the avoidance holes 40211 are distributed at intervals along the length direction of the avoidance groove 40212, that is, the corresponding explosion-proof valves 4012 are also distributed at intervals, thus well guaranteeing function stability of the explosion-proof valves 4012.

Specifically, as shown in FIGS. 11 to 13, the module bottom plate 4021 is located between the battery module 4011 and the bottom protection plate 4022, the explosion-proof valves 4012 are located at the bottom of the battery module 4011, the module bottom plate 4021 is provided with the avoidance groove 40212, the top wall of the avoidance groove 40212 is provided with the avoidance holes 40211, and the avoidance holes 40211 are right opposite to and in one-to-one correspondence with the explosion-proof valves 4012 to avoid mounting positions of the explosion-proof valves 4012.

In some embodiments, the module bottom plate 4021 further includes at least two support regions 40213, the avoidance groove 40212 is defined between every two adjacent support regions 40213, and a first buffer support member 404 is arranged between each support region 40213 and the battery module 4011. That is, the module bottom plate 4021 is provided with the support regions 40213, and the support regions 40213 may be configured to define the avoidance grooves 40212, that is, every two adjacent support regions 40213 may define one avoidance groove 40212, so that gas flow at the avoidance holes 40211 can flow from positions between the support regions 40213 to the exhaust passage 40221.

Meanwhile, the first buffer support member 404 is arranged between each support region 40213 and the battery module 4011, and the first buffer support member 404 is arranged to buffer an external pressure, reduce possible vibration, then protect the battery module 4011 and the explosion-proof valve 4012 and provide internal support, so that the structure is more stable and not prone to deformation.

Exemplarily, as shown in FIGS. 11 to 13, the module bottom plate 4021 is provided with five support regions 40213, the five support regions 40213 define four avoidance grooves 40212, the first buffer support member 404 is arranged above each support region 40213, and each first buffer support member 404 may be designed to have a solid or honeycomb structure, for example, be made of MPP square micro-porous foam, MPP honeycomb foam, or the like.

In some embodiments, a plurality of buffer cavities 402131 are formed in the support region 40213, and every two adjacent buffer cavities 402131 are separated by a separation rib plate 402132. As shown in FIGS. 11 to 13, the plurality of buffer cavities 402131 are formed in the support region 40213 of the module bottom plate 4021, the separation rib plate 402132 is arranged between every two adjacent buffer cavities 402131, the separation rib plates 402132 provide a certain support effect for the buffer cavities 402131, and meanwhile, the buffer cavities 402131 are designed as hollow cavities, which provides conditions for achieving different effects.

Specifically, the buffer cavity 402131 may directly adopt a hollow cavity structure or be internally provided with a buffer energy absorbing material to buffer the external pressure, reduce internal vibration and then protect the battery module 4011 and the explosion-proof valve 4012 to a certain extent. Alternatively, the buffer cavity 402131 is directly designed as a liquid cooling cavity, for example, internally provided with a phase change material, so as to perform lower cooling on the battery module 4011. The module bottom plate 4021 can achieve functions of support, cooling, buffer energy absorption, or the like, according to actual conditions, and the functions required to be achieved can be flexibly selected by a user in actual use, so that the battery pack 40100 can be suitable for different scenarios, and an application range is increased.

In some embodiments, a side wall of the buffer cavity 402131 connected with the avoidance groove 40212 and/or at least one separation rib plate 402132 are/is configured as inclined reinforcing plates/an inclined reinforcing plate. That is, one or both of the two side walls of each avoidance groove 40212 connected with the buffer cavity 402131 can be configured as the inclined reinforcing plate(s), and the reinforcing plate is inclined relative to a vertical direction, so that when the bottom of the battery pack 40100 is impacted, an impact force cannot be transferred upwards along the reinforcing plate, and the force is dispersed effectively and prevented from acting on the battery module 4011 upwards. Therefore, the design of the inclined reinforcing plate can enhance overall strength of the structure and disperse the bottom impact force to achieve buffer and deformation effects, thus protecting the battery module 4011 and the explosion-proof valve 4012.

Exemplarily, as shown in FIGS. 11 to 13, the two side walls of the avoidance groove 40212 connected with the buffer cavity 402131 are designed as the inclined reinforcing plates, and the arrangement of the reinforcing plates makes the structure more stable, thereby improving the overall structural strength of the battery pack 40100 and meanwhile protecting the battery module 4011 and the explosion-proof valve 4012.

In some embodiments, a cooling medium or a buffer material is arranged in the buffer cavity 402131. That is, the buffer cavity 402131 can be filled with the cooling medium to provide lower cooling for the battery module 4011, so that the internal temperature can be rapidly lowered; alternatively, the buffer cavity 402131 may be filled with the buffer material to buffer and absorb the external pressure, so as to achieve a vibration reduction purpose, and further protect the battery module 4011 and the explosion-proof valve 4012.

Specifically, as shown in FIGS. 11 to 13, the module bottom plate 4021 includes the support region 40213, the support region 40213 defines the avoidance groove 40212, the buffer cavities 402131 are formed in the support region 40213 and separated by the separation rib plates 402132, functions of the buffer cavities 402131 depend on the fillers selected by the user in an actual use process, and if the temperature of the battery module 4011 needs to be reduced, the built-in phase change material can be selected, and the buffer cavity 402131 is designed as a liquid cooling plate 403. If vibration reduction needs to be realized, the built-in buffer energy absorbing material can be selected. When the selected material is different, the functions of the buffer cavities 402131 are correspondingly different, and flexible selection of the content can increase the application range of the battery pack 40100.

In some embodiments, the bottom protection plate 4022 is further provided with a buffer groove spaced apart from the exhaust passage 40221, and a second buffer support member 405 is arranged in the buffer groove. As shown in FIG. 11, the bottom protection plate 4022 is arranged at the bottom of the battery box 401, the bottom protection plate 4022 is provided with the buffer groove spaced apart from the exhaust passage 40221 except for the exhaust passage 40221, the exhaust passage 40221 is configured to exhaust the gas inside the battery pack 40100, and the buffer groove may be provided therein with the second buffer support member 405.

Specifically, since the second buffer support member 405 is arranged in the buffer groove, when the bottom protection plate 4022 is subjected to an external force, the force can act on the second buffer support member 405 first, and the second buffer support member 405 can perform buffering through elastic deformation to avoid that the impact force acts on the module bottom plate 4021 to deform the module bottom plate 4021, thus protecting the battery module 4011 and the explosion-proof valve 4012. The second buffer support member 405 may be made of a same material as the first buffer support member 404, or may be made of other buffer materials.

In some embodiments, as shown in FIGS. 11 to 12 and FIG. 14, the buffer groove includes a first buffer groove 402221 and a second buffer groove 402222, the first buffer groove 402221 is opened on a side of the bottom protection plate 4022 facing away from the module bottom plate 4021, and the second buffer groove 402222 is opened on a side of the bottom protection plate 4022 facing the module bottom plate 4021. That is, the buffer grooves on the bottom protection plate 4022 have two kinds: the first buffer groove 402221 and the second buffer groove 402222, each of the first buffer groove 402221 and the second buffer groove 402222 is opened in one direction, the opened directions are opposite, and specifically, the first buffer groove 402221 is opened towards the side facing away from the module bottom plate 4021, and the second buffer groove 402222 is opened towards the side facing the module bottom plate 4021.

Specifically, as shown in FIG. 11, the bottom protection plate 4022 is connected to the bottom of the battery box 401, the bottom protection plate 4022 is provided with the exhaust passage 40221 and the buffer groove, and the first buffer groove 402221 and the second buffer groove 402222 of the buffer groove are opened in different directions and provided therein with the second buffer support members 405 respectively.

It should be noted that the exhaust passage 40221 corresponding to the explosion-proof valve 4012 is formed by a zigzag groove in the bottom protection plate 4022, and if a Z-direction exhaust space during thermal runaway is enlarged, an elastic member can be added to a bottom of the exhaust passage 40221, so that the exhaust space can be increased, and the whole battery pack 40100 can be prevented from generating abnormal sounds.

In some embodiments, the battery pack further includes: the liquid cooling plate 403 mounted at a top of the battery box 401, wherein a heat-conducting structural adhesive 406 is arranged between the liquid cooling plate 403 and the battery module 4011. It should be noted that the battery box 401 can be designed into an annular frame structure which is opened at the top and bottom, the bottom protection plate 4022 is configured to improve the bottom protection performance, and the top is provided with the liquid cooling plate 403 to support the whole structure and meanwhile cool the battery module 4011.

It can be understood that the liquid cooling plate 403 is configured to cool the battery module 4011. That is, when a reaction occurs in the battery pack 40100 to cause an excessively high temperature, the liquid cooling plate 403 can achieve the effect of lowering the internal temperature. Specifically, the liquid cooling plate 403 is mounted at the top of the battery box 1, that is, lowers the internal temperature from the top. Meanwhile, the buffer cavity 402131 can be directly designed as the liquid cooling cavity, so as to cool the battery module 4011 from the top and the bottom at the same time. The heat-conducting structural adhesive 406 is arranged between the liquid cooling plate 403 and the battery module 4011, and the heat-conducting structural adhesive 406 has a good heat conducting effect, so that the internal temperature can be transferred rapidly, thereby increasing a cooling speed and improving a cooling efficiency.

The liquid cooling plate 403 arranged at the top of the battery box 1 can cool the battery module 4011 and meanwhile support the whole battery pack 40100; the heat-conducting structural adhesive 406 between the liquid cooling plate 403 and the battery box 401 can realize quick conduction of the temperature and meanwhile have the effect of connecting the liquid cooling plate 403 and the battery box 401, so that the structure is more stable and not prone to damage.

In the description of the present application, terms "first feature" and "second feature" may include one or more of this feature.

In the description of the present application, "a plurality of" means two or more.

In the description of the present application, a structure in which a first feature is "on" or "below" a second feature may include an embodiment in which the first feature is in direct contact with the second feature, and may also include an embodiment in which the first feature and the second feature are not in direct contact but are contacted via an additional feature formed therebetween.

In the description of the present application, a first feature "on", "above", or "on top of" a second feature may include an embodiment in which the first feature is right and obliquely "on", "above", or "on top of" the second feature, or just means that the first feature is at a height higher than that of the second feature;

In the description of the present specification, reference to "an embodiment", "some embodiments", "exemplary embodiment", "example", "specific example" or "some examples" means that a particular feature, structure, material, or characteristic described in connection with the embodiment or example is included in at least one embodiment or example of the present application. In the specification, the schematic expressions to the above-mentioned terms are not necessarily referring to the same embodiment or example. Furthermore, the described particular features, structures, materials, or characteristics may be combined in any suitable manner in one or more embodiments or examples.

Although embodiments of the present application have been shown and illustrated, it shall be understood by those skilled in the art that various changes, modifications, alternatives and variants can be made to these embodiments without departing from the principle and idea of the present application. The scope of the present application is defined by the claims and equivalents thereof.

## Claims

1. A battery pack, comprising:
a battery box, wherein a battery module is arranged in the battery box, and a bottom of the battery module is provided with an explosion-proof valve; and
a bottom protection plate assembly comprising a liquid cooling plate and a bottom protection plate component, wherein the liquid cooling plate is mounted at the bottom of the battery module, the bottom protection plate component is connected to a bottom of the battery box and supported at a bottom of the liquid cooling plate, the liquid cooling plate is provided with a cooling flow channel and an avoidance groove, the avoidance groove is right opposite to the explosion-proof valve, and the bottom protection plate component is provided with an exhaust passage communicated with the avoidance groove.

2. The battery pack according to claim 1, wherein the liquid cooling plate comprises a bottom plate portion and a side plate portion, the bottom plate portion and the side plate portion are connected in a bent manner and respectively provided with the cooling flow channel, the bottom plate portion is located at the bottom of the battery module, and the side plate portion is located on a side of the battery module.

3. The battery pack according to claim 2, wherein the cooling flow channel comprises a first flow channel and a second flow channel, an extending direction of the first flow channel is intersected with an extending direction of the second flow channel, the first flow channel is arranged at the bottom plate portion, one part of the second flow channel is located on the bottom plate portion, and the other part thereof is located on the side plate portion.

4. The battery pack according to claim 3, wherein the avoidance groove is spaced apart from the first flow channel in parallel.

5. The battery pack according to claim 2, wherein a first heat-conducting structural adhesive is arranged between the bottom plate portion and the battery module;
and/or, the side of the battery module is provided with a pole, a busbar is connected to the pole, and a second heat-conducting structural adhesive is arranged between the side plate portion and the busbar.

6. The battery pack according to claim 2, wherein the liquid cooling plate is provided with an avoidance hole and a communication hole, the avoidance hole is right opposite to the explosion-proof valve, the avoidance hole and the communication hole are respectively communicated with the avoidance groove, and the avoidance groove is communicated with the exhaust passage through the communication hole.

7. The battery pack according to claim 6, wherein a number of the explosion-proof valves of each battery module is multiple, multiple avoidance holes are provided and in one-to-one correspondence with the multiple explosion-proof valves, and the multiple avoidance holes are distributed at intervals along an extending direction of the avoidance groove.

8. The battery pack according to claim 1, wherein the bottom protection plate component is further provided with a buffer cavity spaced apart from the exhaust passage.

9. The battery pack according to claim 8, wherein the bottom protection plate component is provided with a buffer member between a region where the buffer cavity is located and the liquid cooling plate.

10. The battery pack according to claim 8 or 9, wherein multiple battery modules and multiple liquid cooling plates are provided and in one-to-one correspondence; and
the buffer cavity comprises side buffer cavities and middle buffer cavities, the side buffer cavities are located at the bottoms of the battery modules, and the middle buffer cavities are located at bottoms of joints of adjacent battery modules.

11. A battery pack, comprising:
a battery box, wherein a battery module is mounted in the battery box, and a bottom of the battery module is provided with an explosion-proof valve;
a bottom protection plate assembly comprising a first liquid cooling plate and a bottom protection plate, wherein the bottom protection plate is connected to a bottom of the battery box, the first liquid cooling plate is located between the battery module and the bottom protection plate, and the first liquid cooling plate is provided with an avoidance hole right opposite to the explosion-proof valve; and
a second liquid cooling plate, wherein a cooling flow channel is arranged in both the second liquid cooling plate and the first liquid cooling plate, and the second liquid cooling plate is mounted at a top of the battery box and configured to cool a top and a side of the battery module.

12. The battery pack according to claim 11, wherein an exhaust space is defined between the bottom protection plate and the first liquid cooling plate, and the exhaust space is communicated with the avoidance hole.

13. The battery pack according to claim 12, wherein a buffer member is arranged in the exhaust space, and the buffer member is supported between the bottom protection plate and the first liquid cooling plate.

14. The battery pack according to claim 11, wherein the second liquid cooling plate comprises a top plate portion and a side plate portion, the top plate portion and the side plate portion are connected in a bent manner and respectively provided with the cooling flow channel, the top plate portion is located at the top of the battery module, and the side plate portion is located on the side of the battery module.

15. The battery pack according to claim 14, wherein a first heat-conducting structural adhesive is arranged between the top plate portion and the battery module;
and/or, the side of the battery module is provided with a pole, a busbar is connected to the pole, and a second heat-conducting structural adhesive is arranged between the side plate portion and the busbar.

16. The battery pack according to claim 14, wherein the cooling flow channel comprises a first flow channel and a second flow channel, an extending direction of the first flow channel is intersected with an extending direction of the second flow channel, the first flow channel is arranged at the top plate portion, one part of the second flow channel is located on the top plate portion, and the other part thereof is located on the side plate portion.

17. The battery pack according to claim 14, further comprising: a reinforcing member mounted at a position of a top of the top plate portion close to an edge of the side plate portion and extending outwards to protrude from the side plate portion to be connected with the battery box.

18. The battery pack according to claim 14, wherein the liquid cooling plate further comprises an intermediate plate portion connected to a lower side surface of the top plate portion, and the intermediate plate portion is spaced apart from the side plate portion in parallel; and
at least two battery modules are provided, and the intermediate plate portion extends to a position between every two adjacent battery modules to cool side surfaces of the battery modules.

19. The battery pack according to claim 11, wherein the battery box further comprises a box side wall, the box side wall is provided with a buffer cavity, and the buffer cavity comprises a plurality of buffer sub-cavities.

20. The battery pack according to claim 11, further comprising box longitudinal beams, wherein multiple battery modules and multiple first liquid cooling plates are provided and distributed in a one-to-one correspondence manner, the box longitudinal beams are connected between adjacent first liquid cooling plates, and end portions of adjacent battery modules close to each other are supported on the box longitudinal beams.

21. A battery pack, comprising:
a battery box, wherein a battery module is mounted in the battery box, and a bottom of the battery module is provided with an explosion-proof valve;
a bottom protection plate assembly comprising a bottom protection plate component and an explosion-proof valve protection member, wherein the bottom protection plate component is connected to a bottom of the battery box, the explosion-proof valve protection member is supported between the bottom protection plate component and the battery module, and the explosion-proof valve protection member is provided with an avoidance groove right opposite to the explosion-proof valve; and
a liquid cooling plate mounted at a top of the battery box, wherein the liquid cooling plate is provided therein with a cooling flow channel and configured to cool a top and a side of the battery module.

22. The battery pack according to claim 21, wherein the liquid cooling plate comprises a top plate portion and a side plate portion, the top plate portion and the side plate portion are connected in a bent manner and respectively provided with the cooling flow channel, the top plate portion is located at the top of the battery module, and the side plate portion is located on the side of the battery module.

23. The battery pack according to claim 22, wherein the cooling flow channel comprises a first flow channel and a second flow channel, an extending direction of the first flow channel is intersected with an extending direction of the second flow channel, the first flow channel is arranged at the top plate portion, one part of the second flow channel is located on the top plate portion, and the other part thereof is located on the side plate portion.

24. The battery pack according to claim 23, wherein multiple first flow channels are provided and arranged at intervals in parallel along a length direction of the top plate portion, and the second flow channel is communicated with the outermost first flow channel.

25. The battery pack according to claim 23, wherein multiple second flow channels are provided and arranged at intervals in parallel along a width direction of the top plate portion.

26. The battery pack according to claim 22, wherein a first heat-conducting structural adhesive is arranged between the top plate portion and the battery module;
and/or, the side of the battery module is provided with a pole, a busbar is connected to the pole, and a second heat-conducting structural adhesive is arranged between the side plate portion and the busbar.

27. The battery pack according to claim 22, further comprising: a reinforcing member mounted at a position of a top of the top plate portion close to an edge of the side plate portion and extending outwards to protrude from the side plate portion.

28. The battery pack according to claim 21, wherein the explosion-proof valve protection member comprises a support region and an avoidance region, a side of the avoidance region facing the battery module is provided with the avoidance groove, the support region is supported at the bottom of the battery module, and a buffer groove is formed in a side of the support region facing the bottom protection plate component.

29. The battery pack according to claim 28, wherein the buffer groove is provided therein with an elastic energy absorbing member.

30. The battery pack according to claim 21, wherein multiple battery modules and multiple explosion-proof valve protection members are provided and in one-to-one correspondence, and a box longitudinal beam is connected between every two adjacent explosion-proof valve protection members.

31. A battery pack, comprising:
a battery box, wherein a battery module is mounted in the battery box, and a bottom of the battery module is provided with an explosion-proof valve; and
a bottom protection plate assembly comprising a bottom protection plate and a module bottom plate, wherein the bottom protection plate is connected to a bottom of the battery box, the module bottom plate is supported between the battery module and the bottom protection plate, the module bottom plate is provided with an avoidance hole, the avoidance hole is right opposite to the explosion-proof valve, the bottom protection plate is provided with an exhaust passage, and the exhaust passage is opened towards the avoidance hole.

32. The battery pack according to claim 31, wherein a side of the module bottom plate facing the bottom protection plate is provided with an open avoidance groove, the avoidance groove is right opposite to the exhaust passage, and the avoidance hole is formed in a top wall of the avoidance groove.

33. The battery pack according to claim 32, wherein multiple avoidance holes are provided and in one-to-one correspondence with the multiple explosion-proof valves, and the multiple avoidance holes are distributed at intervals along a length direction of the avoidance groove.

34. The battery pack according to claim 32, wherein the module bottom plate further comprises at least two support regions, the avoidance groove is defined between every two adjacent support regions, and a first buffer support member is arranged between each support region and the battery module.

35. The battery pack according to claim 34, wherein a plurality of buffer cavities are formed in the support region, and every two adjacent buffer cavities are separated by a separation rib plate.

36. The battery pack according to claim 35, wherein a side wall of the buffer cavity connected with the avoidance groove and/or at least one separation rib plate are/is configured as inclined reinforcing plates/an inclined reinforcing plate.

37. The battery pack according to claim 35, wherein a cooling medium or a buffer material is arranged in the buffer cavity.

38. The battery pack according to claim 31, wherein the bottom protection plate is further provided with a buffer groove spaced apart from the exhaust passage, and a second buffer support member is arranged in the buffer groove.

39. The battery pack according to claim 38, wherein the buffer groove comprises a first buffer groove and a second buffer groove, the first buffer groove is opened on a side of the bottom protection plate facing away from the module bottom plate, and the second buffer groove is opened on a side of the bottom protection plate facing the module bottom plate.

40. The battery pack according to claim 31, further comprising: a liquid cooling plate mounted at a top of the battery box, wherein a heat-conducting structural adhesive is arranged between the liquid cooling plate and the battery module.
